# EUROPÄISCHE PATENTSCHRIFT

(11) **EP 2 052 017 B1**
(45) Veröffentlichungstag und Bekanntmachung des Hinweises auf die Patenterteilung: **28.09.2011**
(21) Anmeldenummer: 07786438.7
(22) Anmeldetag: 31.07.2007
(51) Int. Cl.: C08K 3/04, C08K 7/06

(54) **ANTISTATISCHE UND ELEKTRISCH LEITFÄHIGE POLYURETHANE**
ANTISTATIC AND ELECTRICALLY CONDUCTIVE POLYURETHANES
POLYURÉTHANNE ANTISTATIQUE ET CONDUCTEUR ÉLECTRIQUE

(30) Priorität: 11.08.2006 DE 102006037582
(43) Veröffentlichungstag der Anmeldung: 29.04.2009
(73) Patentinhaber: Bayer MaterialScience AG, 51368 Leverkusen (DE)
(72) Erfinder: EHBING, Hubert, 51519 Odenthal (DE); KRAUSE, Jens, 51063 Köln (DE); LIEBEGOTT, Lutz, 51379 Leverkusen (DE); FAEHLING, Friedhelm, 51061 Köln (DE); EISEN, Norbert, 50999 Köln (DE)
(86) Internationale Anmeldenummer: PCT/EP2007/006739
(87) Internationale Veröffentlichungsnummer: WO 2008/017399

(56) Entgegenhaltungen:
- DE-A1- 3 528 597
- DE-A1- 19 858 825
- US-A1- 2004 144 963

## Beschreibung

Die Erfindung betrifft antistatische und elektrisch leitfähige Polyurethane, die leitfähige Ruße und Kohlenstofffasern enthalten, und deren Verwendung.

Polyurethane sind seit langem bekannt und zeichnen sich durch ihre große Vielfalt aus. Eine Übersicht über Polyurethane, ihre Eigenschaften und Anwendungen wird beispielsweise im Kunststoffhandbuch, Band 7, Polyurethane, 3. neu bearbeitete Auflage, Band 193, herausgegeben von Prof. Dr. G.W. Becker und Prof. Dr. D. Braun (Carl-Hanser-Verlag, München, Wien) gegeben.

Neben weichen und harten Schäumen sind auch nicht geschäumte, massive Polyurethane, wie z.B. Gießelastomere von Interesse. Besonders massive Polyurethane oder Polyurethane mit einer Rohdichte von > 500 kg/m³ finden in Bereichen Verwendung, wo es neben den herausragenden Materialeigenschaften auch auf antistatische und elektrisch leitfähige Eigenschaften ankommt. Erwähnt seien hier Fußbodenbeläge, Reifen, lackierfähige Walzen, Rollen und Elektrovergussmaterialien. Gerade in einigen hochsensiblen technischen Ausrüstungen sind Aufladungen unbedingt zu vermeiden. Polyurethane sind ebenso wie auch die meisten thermoplastischen Polymere per se nicht leitfähig. Gängige Oberflächenwiderstände liegen im Bereich von 10¹³ Ohm.

Um diesen hohen Widerstand zu senken, sind zahlreiche Zusatzstoffe bekannt. Sehr früh wurden Salze wie z.B. Ammoniumsalze (z.B. Catafor^{®} von der Firma Rhodia GmbH) verwendet, um den Oberflächenwiderstand zu senken. Leider haben diese Zusatzstoffe den Nachteil, bei Polyesterpolyol-basierten Polyurethanen die Hydrolyse zu beschleunigen. Ferner ist die Migration an die Oberflächen und damit einhergehend ein Kreiden ein großer Nachteil. Hinzu kommt, dass die erzielten Effekte vergleichsweise gering sind, und der Oberflächenwiderstand lediglich um 2-3 Zehnerpotenzen erniedrigt wird.

Neben der Verwendung dieser Salze, ist auch die Verwendung von leitfähigem Ruß (beispielsweise Leitruß mit einer Oberfläche von 600-1200 m²/g nach BET; beispielsweise Ketjenblack^{®} von der Firma Akzo Nobel Polymer Chemicals bv) oder von Kohlenstofffasern bekannt. Die Verwendung von Leitruß ist beispielsweise in EP-A 0 129 193 und DE-A 3 528 597 beschrieben. Mit Leitrußen lassen sich gute Oberflächenwiderstände in geschäumten und nicht geschäumten Polyurethanen erzielen (bis zu 10⁴ Ohm). Allerdings ergibt sich durch die erforderlichen Mengen an Leitruß stets eine sehr hohe Viskosität der Reaktionskomponenten, so dass derartige Systeme mit den gängigen Polyurethan-Maschinen nicht mehr verarbeitet werden können. Technisch werden derartige Systeme daher kaum angewendet. Wesentlich niedrigere Viskositäten können durch Verwendung von Kohlenstofffasern - wie in DE-A 19 858 825 beschrieben - erreicht werden. Mit relativ hohen Konzentrationen Kohlenstofffasern werden bei gerade noch akzeptablen Verarbeitungsviskositäten Oberflächenwiderstände unter 10⁴ Ohm erreicht. Bei der Anwendung zeigt sich jedoch, dass bei mechanisch beanspruchten Teilen, die Fasern brechen und die Leitfähigkeit sehr schnell abnimmt bis wieder ein nicht leitfähiges Polyurethan vorliegt. Dieses Brechen der Fasern tritt auch bereits bei der Verarbeitung auf, so dass derartige PUR-Systeme großtechnisch keine Verwendung finden.

Ferner ist zur Reduzierung des elektrischen Widerstandes der Einsatz von Graphiten (z.B. Cond 8/96 der Firma Graphit Kopfmühl AG) denkbar. Um aber eine brauchbare Leitfähigkeit zu erhalten, wären Konzentrationen im Polyurethan-Reaktionssystem erforderlich, die eine erhebliche Viskositätserhöhung bedeuten würden und daher eine technische Verarbeitung ausschließen.

Aufgabe war es daher, antistatische und elektrisch leitfähige Polyurethane zur Verfügung zu stellen, deren Reaktionskomponenten technisch verarbeitet werden können, d.h. die Reaktionskomponenten und deren Gemisch eine ausreichend niedrige Viskosität aufweisen, und deren Leitfähigkeit über die Zeit bzw. Beanspruchung nicht abnimmt.

Die Aufgabe konnte überraschenderweise durch den Zusatz von Leitruß und Kohlenstofffasern in bestimmten Mengenverhältnissen gelöst werden.

Gegenstand der Erfindung sind antistatische und elektrisch leitfähige, duroplastische oder thermoplastische Polyurethane, erhältlich durch Umsetzung von Isocyanaten mit NCO-reaktive Gruppen enthaltenden Verbindungen, gegebenenfalls unter Zugabe von Katalysatoren, Treibmitteln, Hilfs- und Zusatzstoffen, dadurch gekennzeichnet, dass die Polyurethane (A) einen Leitruß mit einer Oberfläche (gemessen nach der BET-Methode gemäß ASTM D 6556-04) von 600 bis 1200 m²/g, mit einem Absorptionsporenvolumen (gemäß ASTM D 2414-05a mit n-Dibutylphthalat) von 300 bis 450 cm³/100 g Ruß bei etwa 23°C, einer Perldichte (gemäß ASTM D 1513-05) von 20 bis 250 kg/m³ und mit einem durchschnittlichen Teilchengrößendurchmesser von weniger als 50 nm, bevorzugt 10 bis 50 nm und (B) Kohlenstofffasern mit einem Dickendurchmesser von 2 µm bis 10 µm enthalten, wobei das Gewichtsverhältnis von Leitruß (A) zu Kohlenstofffasern (B) 1:2 bis 1:15, bevorzugt 1:4 bis 1:10, besonders bevorzugt 1:4 bis 1:8 und die Gesamtmenge an (A) und (B) 1 bis 15 Gew.%, vorzugsweise 3 bis 10 Gew.%" besonders bevorzugt 4 bis 8 Gew.-%, bezogen auf das Gesamtgewicht an Polyurethan, beträgt.

Das verwendete Gemisch an Reaktionskomponenten und Zusätzen für die erfindungsgemäßen Polyurethane hat eine ausreichend niedrige Viskosität, so dass das Gemisch technisch verarbeitet werden kann. Unter Beanspruchung bleibt die Leitfähigkeit der erfindungsgemäßen Polyurethane erhalten.

Vorzugsweise weisen die Kohlenstofffasern einen Dickendurchmesser von 6 µm bis 10 µm auf. Es können sowohl geschnittene als auch gemahlene Kohlenstofffasern verwendet werden.

Die erfindungsgemäßen Polyurethane haben bevorzugt Rohdichten von 200 kg/m³ bis 1400 kg/m³, besonders bevorzugt von 600 kg/m³ bis 1400 kg/m³ und ganz besonders bevorzugt von 800 kg/m³ bis 1400 kg/m³.

Bevorzugt handelt es sich um nicht thermoplastische Polyurethane.

Massive Polyurethane, z.B. Gießelastomere sind bevorzugt.

Die erfindungsgemäßen Polyurethane können zusätzlich Füllstoffe, wie z.B. Kreiden, Silikate, Dolomite und Aluminiumhydroxide enthalten. Diese in der Polyurethanchemie bekannten nicht leitfähigen Füllstoffe können in Konzentrationen von bis zu 25 Gew.-%, bezogen auf das Polyurethan, vorliegen.

Überraschend wurde gefunden, dass sich eine niedrige Viskosität und eine gute Leitfähigkeit durch Mischungen aus leitfähigen Rußpartikeln und Kohlenstofffasern ergibt.

Die Leitruße werden beispielsweise unter dem Namen Printex^{®} XE 2B der Firma Degussa AG und Ketjenblack^{®} EC der Akzo Nobel Polymer Chemicals bv vermarktet. Die geschnittenen oder gemahlenen Kohlenstofffasern werden beispielsweise unter dem Namen Sigrafil^{®} der Firma SGL Carbon Group vermarktet.

Die erfindungsgemäßen Polyurethane werden beispielsweise für lackierfähige, elektrisch abschirmende und/oder elektrostatisch ableitende Materialien, z.B. für Fußbodenbeläge, Reifen, Walzen, Rollen, Elektrovergussmaterialien , Gehäuseteile und sonstige technische Teile verwendet.

Die Erfindung soll anhand der nachfolgenden Beispiele näher erläutert werden.

### -4-Ausgangskomponenten:

### Polyolkomponente 1:

| | |
|---|---|
| 57,24 Gew.-Teile | Sucrose, Propylenglykol-gestarteter Polyether vom Molekulargewicht 600 g/mol (OH-Zahl: 450) auf Basis 1,2-Propylenoxid |
| 23,05 Gew.-Teile | Sucrose, Ethylenglykol-gestarteter Polyether vom Molekulargewicht 360 g/mol (OH-Zahl: 440) auf Basis 1 ,2-Propylenoxid |
| 17,45 Gew.-Teile | Trimethylolpropan-gestarteter Polyether vom Molekulargewicht 660 g/mol (OH-Zahl: 255) auf Basis Ethylenoxid |
| 0,87 Gew.-Teile | Stabilisator B 8411 (Firma Goldschmidt AG) |
| 1,04 Gew.-Teile | Aktivator Desmorapid® 726B |
| 0,35 Gew.-Teile | Wasser |

### Polyolkomponente 2:

| | |
|---|---|
| 93,53 Gew.-Teile | Trimethylolpropan-gestarteter Polyether vom Molekulargewicht 450 g/mol (OH-Zahl: 385) auf Basis Propylenoxid |
| 1,00 Gew.-Teile | Luviskol K90 (Firma BASF AG) |
| 0,10 Gew.-Teile | Dibutylzinndilaurat |
| 2,50 Gew.-Teile | Baylith^{®} -L-Pulver (Zeolith von UOP LLC) |
| 0,47 Gew.-Teile | Wasser |

### Polyolkomponente 3:

Polyesterpolyol mit OH-Zahl 56 mg KOH/mg, Funktionalität 2, Ethylenbutylenadipat (Vulkollan® 2010i)

### Polyolkomponente 4:

| | |
|---|---|
| 47,04 Gew.-Teile | DE 3170 (Sorbit-, Wasser- gestartetes Polyetherpolyol mit endständigen Ethylenoxidgruppen mit einer OH-Zahl von 100 mg KOH/g und einer Viskosität bei 25°C von 720 mPas) |
| 47,04 Gew.-Teile | L300 (lineares Polyetherpolyol mit Ethylenoxid und einer OH- Zahl von 190 mg KOH/g und einer Viskosität bei 25°C von 120 mPas) |
| 0,99 Gew.-Teile | Tegostab 8411 (Polyetherpolysiloxan Copolymer) |
| 0,99 Gew.-Teile | Ethylengykol |
| 0,81 Gew.-Teile | Katalysator DABCO 33LV (Firma Air Products) |

### Polyolkomponente 5:

| | |
|---|---|
| 91,7 Gew.-Teile | Trimethylolpropan-gestarteter Polyether vom Molekulargewicht 450 g/mol (OH-Zahl: 385) auf Basis Propylenoxid |
| 0,10 Gew.-Teile | Dibutylzinndilaurat |
| 2,50 Gew.-Teile | Baylith^{®} -L-Pulver (Zeolith der Firma UOP LLC) |

### Isocyanat 1:

Desmodur® 44V10L (Polyisocyanatgemisch der Diphenylmethanreihe; NCO-Gehalt: 31,5 Gew.%; Viskosität (25°C): 100 mPas)

### Isocyanat 2:

Desmodur® 44P90; NCO-Gehalt: 28,5 Gew.%; Viskosität (25°C) 130 mPas

### Isocyanat 3:

Desmodur® 15; 1,5-Naphthalindiisocyanat

### Isocyanat 4:

Desmodur® PF; Prepolymer auf Basis von 4,4'Diphenylmethandiisocanat und Tripropylenglykol mit einem NCO-Gehalt von 23 Gew.-% und einer Viskosität von 650 mPas bei 25°C

### Beispiel 1 (Vergleich):

Die Polyolkomponente 1 wurde mit der Kohlenstofffaser Sigrafil^{®} C10 M250 UNS und dem Isocyanat 1 entsprechend der in der Tabelle angegebenen Zusammensetzung mittels eines Pendraulikrührers 90 Sekunden bei einer Drehzahl von 4500 U/min gerührt und in einer geschlossenen Form auf eine Rohdichte von 500 kg/m³ verdichtet.

### Beispiel 2 (Vergleich):

Die Polyolkomponente 1 wurde mit dem leitfähigen Ruß Ketjenblack^{®} EC 600 JD und dem Isocyanat 1 entsprechend der in der Tabelle angegebenen Zusammensetzung mittels Pendraulikrührer 90 Sekunden bei einer Drehzahl von 4500 U/min gerührt und in einer geschlossenen Form auf eine Rohdichte von 500 kg/m³ verdichtet.

### Beispiel 3 (Erfindung):

Die Polyolkomponente 1 wurde mit dem leitfähigen Ruß Ketjenblack^{®} EC 600 JD, der Kohlenstofffaser Sigrafil^{®} C10 M250 UNS und dem Isocyanat 1 entsprechend der in der Tabelle angegebenen Zusammensetzung mittels Pendraulikrührer 90 Sekunden bei einer Drehzahl von 4500 U/min gerührt und in einer geschlossenen Form auf eine Rohdichte von 500 kg/m³ verdichtet.

### Beispiel 4 (Vergleich):

Es wurde versucht, die Polyolkomponente 2 mit Carbon Nanotubes (Baytubes® C 150 P), der Kohlenstofffaser Sigrafil^{®} C10 M250 UNS und dem Isocyanat 2 entsprechend der in der Tabelle angegebenen Zusammensetzung mittels Pendraulikrührer zu verrühren. Eine Verarbeitung war nicht möglich, so dass auch keine Formteile hergestellt und keine Leitfähigkeiten gemessen werden konnten.

### Beispiel 5 (vergleich):

Es wurde versucht, die Polyolkomponente 2 mit Carbon Nanotubes (Baytubes® C 150 P), Graphit Cond 8/96 und dem Isocyanat 2 entsprechend der in der Tabelle angegebenen Zusammensetzung mittels Pendraulikrührer zu verrühren. Eine Verarbeitung war nicht möglich, so dass auch keine Formteile hergestellt und keine Leitfähigkeiten gemessen werden konnten.

### Beispiel 6 (Erfindung):

Die Polyolkomponente 3 wurde mit dem Leitruß Ketjenblack^{®} EC 600 JD und der Leitfaser Sigrafil^{®} C25 S006 PUT entsprechend der in Tabelle 1 angegebenen Zusammensetzung mittels Pendraulikrührer für 90 Sekunden bei 4500 U/min verrührt. Diese Mischung wurde anschließend bei 127°C mit 25 Gew.-Teilen 1,5-Naphthalindiisocyanat umgesetzt. Dann wurde mit 5,0 Gew.-Teilen 1,4-Butandiol vernetzt und eine Prüfplatte gegossen. An dieser Platte wurden anschließend die in der Tabelle angegebenen Leitfähigkeiten nach DIN IEC 60093 ermittelt.

### Beispiel 7 (Vereleich):

100 Gew.-Teile Polyolkomponente 3 wurden bei 127°C mit 25 Gew.-Teilen 1,5-Naphthalindiisocyanat umgesetzt. Dann wurde mit 5 Gew.-Teilen 1,4-Butandiol vernetzt und eine Prüfplatte gegossen. Der an dieser Platte nach DIN IEC 60093 ermittelte Durchgangswiderstand lag im Vergleich zum Beispiel 6 um den Faktor 10⁶ höher.

### Beispiel 8 (Erfindung):

96,87 Gew.-Teile Polyolkomponente 4 wurden mit 0,54 Gew.-Teilen Leitruß Ketjenblack^{®} EC 600 JD und 2,15 Gew.-Teilen Kohlenstofffaser Sigrafil^{®} C10 M250 UNS bei Raumtemperatur vermischt. Anschließend wurde 60 Minuten unter Vakuum (<1 mbar) im Dissolver bei 1100 U/min dispergiert. Behälter- und Scheibendurchmesser des Dissolver betrugen 16 mm bzw. 5 mm. Für die nachfolgende Verschäumung auf eine Rohdichte von ca. 400 kg/m³ wurden 0,45 Gew. % Wasser zugesetzt. Es lag ein fließ- und pumpfähiges Gemisch vor.

62,44 Gew.-Teile der Isocyanatkomponente 4 wurden mit 2,15 Gew.-Teilen Leitruß Ketjenblack^{®} EC 600 JD und 0,54 Gew.-Teilen der Kohlenstofffaser Sigrafil^{®} C10 M250 UNS bei Raumtemperatur vermischt. Bei Raumtemperatur und einem Druck von < 1 mbar wurde über 90 Minuten bei 1100 U/min dispergiert. Behälter- und Scheibendurchmesser des Dissolver betrugen 16 mm bzw. 5 mm. Es lag ein fließ- und pumpfähiges Gemisch vor.

Die Vermischung des Polyol- und des Isocyanatansatzes (inkl. Fasern und Ruß) im Verhältnis 100 65,13 erfolgte mittels Hochdruckinjektionsvermischung bei 60°C Produkttemperatur. Das Reaktionsgemisch wurde in eine geschlossene, auf 60°C temperierte Form ausgetragen. Die Messungen der Oberflächen- und Durchgangswiderstände erfolgte dann an 10 mm dicken Platten entsprechend DIN IEC 60093. Mit 4x10⁶ Ohm für den Oberflächen- und 6x10³ Ohmcm für den Durchgangswiderstand lagen die Werte signifikant niedriger als die für diese Polyurethane (ohne Zusatz von Ruß und Kohlenstofffasern) üblichen 10¹⁰ bis 10¹⁴ Ohm bzw. 10¹⁰ bis 10¹⁴ Ohmcm.

### Beispiel 9 (Vergleich):

Zu 94,3 Gew.-Teilen Polyol wurden unter Rühren 6,1 Gew.-Teile Graphit Cond 8/96 sowie 2,2 Gew.-Teile Baytubes^{®} C 150 P (carbon nanotubes) zugegeben. Die so erhaltene Dispersion wurde anschließend mit einem Hochdruckhomogenisator (Micron Lab 40, Fa. APV, Unna) bei 1000 bar dreimal homogenisiert. Die Polyoldispersion war nicht pumpfähig, so dass eine technisch maschinelle Verarbeitung nicht möglich war.

Die Dispersion wurde anschließend mit dem Isocyanat 2 entsprechend der in der Tabelle angegebenen Zusammensetzung mittels Pendraulikrührer 90 Sekunden bei einer Drehzahl von 4500 U/min gerührt. Eine Verarbeitung war äußerst schwierig. An dem auf einer Platte ausgegossenen Reaktionsgemisch konnten die in der Tabelle aufgeführten Widerstände bestimmt werden.

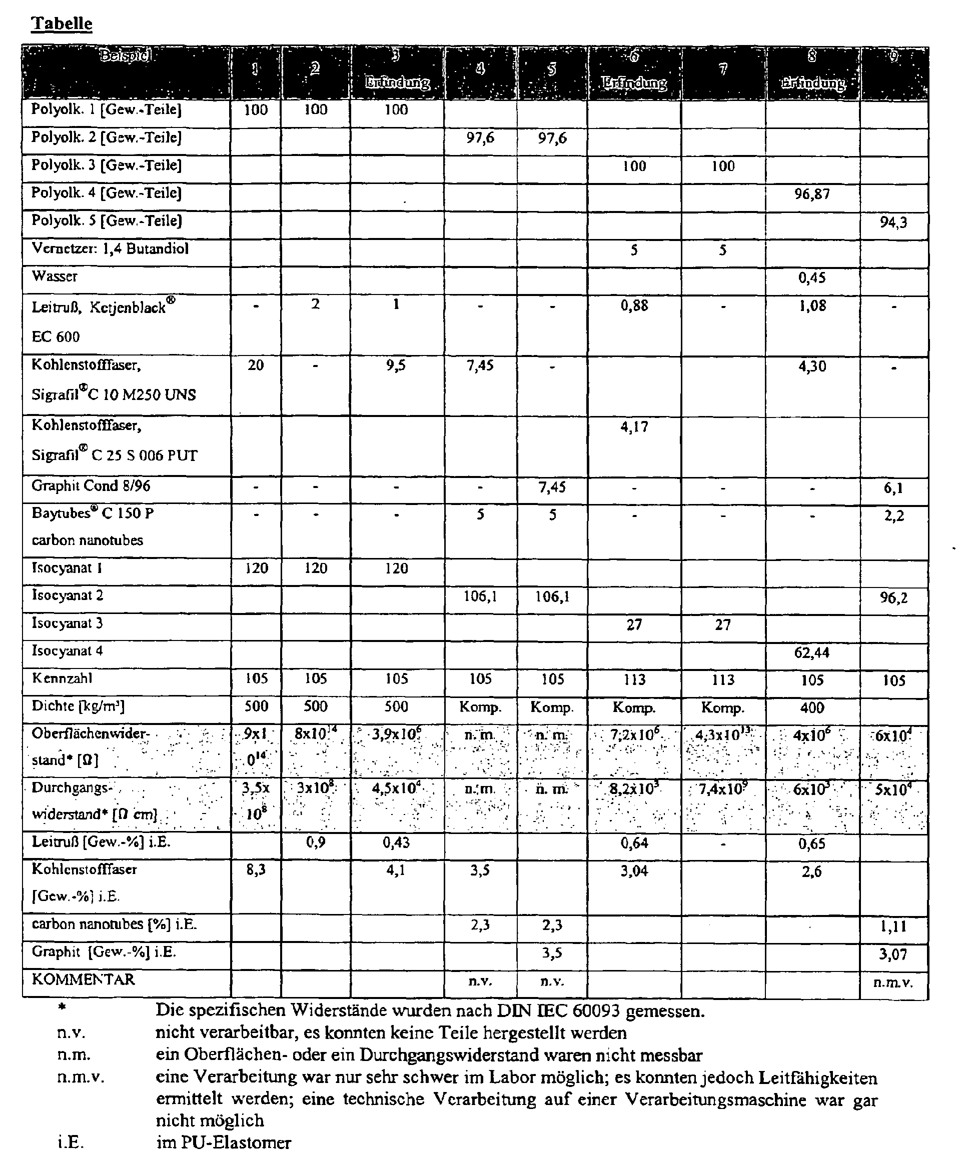

## Patentansprüche

1. Antistatische und elektrisch leitfähige, duroplastische oder thermoplastische Polyurethane erhältlich durch Umsetzung von Isocyanaten mit NCO-reaktive Gruppen enthaltenden Verbindungen, gegebenenfalls unter Zugabe von Katalysatoren, Treibmitteln, Hilfs- und Zusatzstoffen, **dadurch gekennzeichnet, dass** die Polyurethane
A) leitfähigen Ruß mit einer Oberfläche (gemessen nach der BET-Methode gemäß ASTM D 6556-04) von 600 bis 1200 m²/g, einem Absorptionsporenvolumen (gemäß ASTM D 2414-05a mit dem Absorptionsmittel n-Dibutylphthalat bei etwa 23°C) von 300 bis 450 cm³/100 g Ruß, einer Perldichte (gemäß ASTM D 1513-05) von 20 bis 250 kg/m³ und einem durchschnittlichen Teilchengrößendurchmesser von weniger als 50 nm und
B) Kohlenstofffasern mit einem Dickendurchmesser von 2 µm bis 10 µm enthalten, wobei das Gewichtsverhältnis von Leitruß (A) zu Kohlenstofffasern (B) 1:2 bis 1: 15, bevorzugt 1:4 bis 1:10, besonders bevorzugt 1:4 bis 1:8 beträgt und die Gesamtmenge an (A) und (B) 1 bis 15 Gew.%, bezogen auf das Gesamtgewicht an Polyurethan, beträgt.

2. Polyurethane gemäß Anspruch 1, **dadurch gekennzeichnet, dass** die Polyurethane nicht thermoplastisch sind.

3. Polyurethane gemäß Anspruch 1 oder 2, **dadurch gekennzeichnet, dass** die Rohdichte (gemäß DIN EN ISO 845-1995-06) der Polyurethane 200 kg/m³ bis 1400 kg/m³ ist.

4. Polyurethane gemäß einem oder mehreren der Ansprüche 1 bis 3, **dadurch gekennzeichnet, dass** die Polyurethane nicht geschäumt sind, sondern massiv.

5. Verwendung der Polyurethane gemäß Anspruch 1 bis 4 für lackierfähige, elektrisch abschirmende und elektrostatisch ableitende Materialien.

## Claims

1. Antistatic and electrically conductive, thermoset or thermoplastic polyurethanes which can be obtained by reacting isocyanates with compounds containing NCO-reactive groups, optionally with the addition of catalysts, blowing agents, auxiliaries and additives, **characterized in that** the polyurethanes contain
A) conductive carbon black having a surface area (measured by the BET method in accordance with ASTM D 6556-04) of from 600 to 1200 m²/g, an absorption pore volume (in accordance with ASTM D 2414-05a using the absorption medium n-dibutyl phthalate at about 23°C) of from 300 to 450 cm³/100 g of carbon black, a bead density (in accordance with ASTM D 1513-05) of from 20 to 250 kg/m³ and an average particle diameter of less than 50 nm and
B) carbon fibres having a thickness diameter of from 2 µm to 10 µm,
where the weight ratio of conductive carbon black (A) to carbon fibres (B) is from 1:2 to 1:15, preferably from 1:4 to 1:10, particularly preferably from 1:4 to 1:8, and the total amount of (A) and (B) is from 1 to 15% by weight, based on the total weight of polyurethane.

2. Polyurethanes according to Claim 1, **characterized in that** the polyurethanes are not thermoplastic.

3. Polyurethanes according to Claim 1 or 2, **characterized in that** the apparent density (in accordance with DIN EN ISO 845-1995-06) of the polyurethanes is from 200 kg/m³ to 1400 kg/m³.

4. Polyurethanes according to one or more of Claims 1 to 3, **characterized in that** the polyurethanes are not foamed but instead solid.

5. Use of the polyurethanes according to any of Claims 1 to 4 for coatable, electrically shielding and electrostatically discharging materials.

## Revendications

1. Polyuréthanes duroplastiques ou thermoplastiques, antistatiques et conducteurs électriques, pouvant être obtenus par mise en réaction d'isocyanates avec des composés contenant des groupes réactifs avec NCO, éventuellement avec ajout de catalyseurs, d'agents gonflants, d'adjuvants et d'additifs, **caractérisés en ce que** les polyuréthanes
A) contiennent de la suie conductrice ayant une surface (mesurée par le procédé BET selon ASTM D 6556-04) de 600 à 1 200 m²/g, un volume poreux d'absorption (selon ASTM D 2414-05a avec l'agent d'absorption phtalate de n-dibutyle à environ 23°C) de 300 à 450 cm³/100 g de suie, une densité de perle (selon ASTM D 1513-05) de 20 à 250 kg/m³ et un diamètre de particule moyen inférieur à 50 nm, et
B) des fibres de carbone d'un diamètre en épaisseur de 2 µm à 10 µm,
le rapport en poids entre la suie conductrice (A) et les fibres de carbone (B) étant de 1:2 à 1:15, de préférence de 1:4 à 1:10, de manière particulièrement préférée de 1:4 à 1:8, et la quantité totale de (A) et (B) étant de 1 à 15 % en poids, par rapport au poids total de polyuréthane.

2. Polyuréthanes selon la revendication 1, **caractérisés en ce que** les polyuréthanes ne sont pas thermoplastiques.

3. Polyuréthanes selon la revendication 1 ou 2, **caractérisés en ce que** la densité apparente (selon DIN EN ISO 845-1995-06) des polyuréthanes est de 200 kg/m³ à 1 400 kg/m³.

4. Polyuréthanes selon une ou plusieurs des revendications 1 à 3, **caractérisés en ce que** les polyuréthanes ne sont pas expansés, mais plutôt massifs.

5. Utilisation des polyuréthanes selon les revendications 1 à 4 pour des matériaux laquables, isolateurs électriques et dissipatifs électrostatiques.
